# EUROPEAN PATENT SPECIFICATION

(11) **EP 1 826 442 B1**
(45) Date of publication and mention of the grant of the patent: **01.09.2010**
(21) Application number: 06025981.9
(22) Date of filing: 14.12.2006
(51) Int. Cl.: F16D 48/06

(54) **Automatic transmission control method and automatic transmission controller**
Steuerungsverfahren und Steuerung für ein automatisches Getriebe
Procédé et dispositif de commande d'une transmission automatique

(30) Priority: 18.04.2006 JP 2006114702; 24.02.2006 JP 2006048086
(43) Date of publication of application: 29.08.2007
(60) Divisional application: 10005913.8
(73) Proprietor: Yamaha Hatsudoki Kabushiki Kaisha, Iwata-shi, Shizuoka-ken 438-8501 (JP)
(72) Inventor: Minami, Kengo, Iwata-shi, Shizuoka-ken 438-8501 (JP); Takeuchi, Yoshihiko, Iwata-shi, Shizuoka-ken 438-8501 (JP)
(74) Representative: Grünecker, Kinkeldey, Stockmair & Schwanhäusser Anwaltssozietät

(56) References cited:
- EP-A1- 0 887 220
- EP-A2- 1 122 116
- DE-B3- 10 304 588
- DE-T5- 10 393 681
- US-B1- 6 502 681

## Description

The present invention relates to an automated transmission controller and to a vehicle including the automated transmission controller which automatically executes shift change, and a shift change process.

A known vehicle (motorcycle) includes an automated transmission controller (automated manual transmission device) which effects engagement and disengagement of its friction clutch and gear change of its transmission using electrically powered actuators (for example, see Patent Reference Nos. 1 and 2). The automated transmission controller according to these references controls operation of the actuators (clutch actuator and shift actuator) such that processes for disconnection of the friction clutch, gear change of the transmission, and half-clutch control over the friction clutch (connecting operation) can be performed in this order at the time of shift change.
Patent Reference 1: JP-A-2001-146930 (& US-B-6502681, disclosing all features of the preamble of claim 1)
Patent Reference 2: JP-A-2001-173685

However, the shift change operation performed by the above transmission controller requires long disengagement period of the friction clutch, and causes the following problems. In shift-up operation, considerable acceleration has been given immediately before the shift-up operation, and thus preferable feeling of acceleration is not offered when the disengagement period of the friction clutch is long. Moreover, at the time of shift change during high-speed running, running resistance is so large that too much deceleration is felt when the disengagement period of the friction clutch is long. When these problems occur, riding feeling given to a rider is deteriorated.

(Document DE 10393681 T5 discloses a gear change controller comprising all features of the preamble of claim 1, and part of the features of the characterizing portion. This document is, however, not to be considered as closest prior art, as the controller is in principle related to gear shifting without opening the clutch. Only in the case that a gear shift without using the clutch is not possible, the clutch is opened, the original gear is disengaged, the clutch is closed again, and then the new gear is engaged.)

The invention has been developed to solve the above problems. It is an object of the invention to provide an automated transmission controller with an improved shift change operation and being capable of enhancing riding comfort and feeling to be offered to a rider.

This objective is solved by the features of claim 1 and 10.

The automated transmission controller comprises: a friction clutch; a transmission having a plurality of first gears on which engaging projections are formed and a plurality of second gears on which engaging concaves to be engaged with the engaging projections are formed, the engaging projections of the first gears and the predetermined engaging concaves of the second gears engaging with each other to effect gear change; a clutch actuator for connecting and disconnecting the friction clutch; a shift actuator for executing gear change of the transmission; and a control unit for controlling the operations of the clutch actuator and the shift actuator, wherein: the control unit is configured to initially operate the shift actuator to start gear change of the transmission, and then to operate the clutch actuator to start disconnection of the friction clutch at the time of shift change during running.

According to the invention, the automated transmission controller comprises a gear position sensor for detecting the gear position of the transmission, wherein the control unit is configured to connect the friction clutch after detection of gear change completion of the transmission given by the gear position sensor.

Preferably, the control unit is configured to operate the clutch actuator to start disconnection of the friction clutch after elapse of a predetermined time from initiation of gear change of the transmission by operating the shift actuator at the time of shift change during running.

According to yet another preferred embodiment, the automated transmission controller further comprises a gear position sensor for detecting the gear position of the transmission, and wherein, when completion of gear change is detected by the gear position sensor during the period from the initiation of disconnection of the friction clutch to completion of the disconnection, the control unit is configured to operate the clutch actuator to connect the friction clutch before completion of disconnection of the friction clutch.

According to still another preferred embodiment, the automated transmission controller further comprises an elastic member for urging a power transmission mechanism disposed between the shift actuator and the transmission in accordance with the operation of the shift actuator.

Preferably, the automated transmission controller is mounted on a vehicle having an engine, and the control unit additionally is configured to execute a driving force reduction process for reducing engine driving force at the time of shift change.

Further, preferably the control unit is configured to execute the driving force reduction process simultaneously with the initiation of gear change of the transmission by the shift actuator, or wherein the control unit is configured to execute the driving force reduction process after elapse of a predetermined time from the initiation of gear change of the transmission by the shift actuator, or wherein the control unit is configured to executes the driving force reduction process a predetermined time before the initiation of gear change of the transmission by the shift actuator.

Yet further, preferably the driving force reduction process is a process for delaying ignition, and/or wherein the driving force reduction process is a process for reducing the fuel injection quantity, and/or wherein the vehicle has an electronically controlled throttle valve provided within an air passage of the engine, and the driving force reduction process is a process for reducing the air quantity by controlling the opening of the electronically controlled throttle valve.

This objective is also solved by a vehicle comprising the automated transmission controller according to one of the above embodiments.

Preferably, the vehicle being a saddle-type vehicle.

This objective is further solved by a shift change process of an automated manual transmission of a vehicle, wherein when shift change is required during running of the vehicle, the following steps are executed: starting gear change of transmission gears of the transmission by a shift actuator; starting disconnection of a clutch by a clutch actuator after the start of gear change; and connecting the clutch by the clutch actuator, after detection of gear change completion.

Preferably, disconnection of a clutch by a clutch actuator is started after elapse of a predetermined time from the start of gear change.

Further, preferably simultaneously with the initiation of gear change a driving force reduction process is started to reduce a driving force transmitted to a main shaft of the transmission.

In the following, the present invention is explained in greater detail with respect to several embodiments thereof in conjunction with the accompanying drawings, wherein:
- Fig. 1: is a side view of a motorcycle in an embodiment,
- Fig. 2: illustrates a structure of a drive system of the motorcycle shown in Fig. 1,
- Fig. 3: is a perspective view of a transmission gear constituting a transmission,
- Fig. 4: is a block diagram showing the entire structure of a control system provided on the motorcycle,
- Fig. 5: is a block diagram showing a drive system group,
- Fig. 6: is a block diagram showing a sensor and switch group,
- Fig. 7: is a flowchart showing a shift change control process during running of the vehicle,
- Figs. 8(a) and 8(b): show clutch position and gear position with elapse of time when the shift change control process is performed during running of the vehicle,
- Figs. 9(a) and 9(b): show clutch position and gear position with elapse of time at the time of shift change during running of a motorcycle according to the related art, and
- Fig. 10: shows clutch position with elapse of time at the time of shift change of a motorcycle in a modified example.

### Description of Reference Numerals and Signs:

- 10: motorcycle (vehicle)
- 28: engine unit
- 43: shift switch
- 43a: shift-up switch
- 43b: shift-down switch
- 49: throttle drive actuator
- 54: clutch (friction clutch)
- 54a: clutch housing
- 54b: clutch boss
- 55: main shaft
- 56: main shaft revolution sensor
- 57, 59: transmission gear
- 57a: first gear
- 57b: second gear
- 57c: engaging projection
- 57e: engaging concave
- 63: clutch actuator
- 65: shift actuator
- 69: vehicle speed sensor
- 70: gear position sensor
- 80: transmission
- 85: spring (elastic material)
- 100: ECU (control unit)

FIG. 4
   - 90: main microcomputer
   - 91 a: clutch actuator control program
   - 91 b: shift actuator control program
   - 93: drive circuit
   - 96: main switch
   - 97: battery
   - 98: power source circuit
   - 110: drive system group
   - 120: sensor and switch group
FIG. 5
   - 110: drive system group
   - 49: throttle drive actuator
   - 45: indicator
   - 63: clutch actuator
   - 65: shift actuator
FIG. 6
   - 120: sensor and switch group
   - 42: throttle input sensor
   - 43: shift switch
   - 50: throttle opening sensor
   - 53: engine revolution sensor
   - 56: main shaft revolution sensor
   - 68: clutch position sensor
   - 69: vehicle speed sensor
   - 70: gear position sensor
FIG. 7
   shift change control process during running of vehicle
   - s100: start gear change
   - s110: driving force reduction process
   ignition delay
   injection quantity reduction
   air quantity reduction
   - s120: predetermined time elapsed?
   - s130: start disconnection of clutch
   - s140: clutch disconnected?
   - s150: maintain clutch position
   - s160: gear change completed?
   - s170: connect clutch (half-clutch control)
   end
FIG. 8(a)
   clutch position
   half-clutch control
   clutch actuator operation start
   time
FIG. 8(b)
   gear position
   completion of dog-separation
   completion of gear change
   dog-contact
   shift actuator operation start
   time
FIG.9(a)
   clutch position
   half-clutch control
   clutch actuator operation start
   time
FIG. 9(b)
   gear position
   completion of gear change
   dog-contact
   time
FIG. 10
   clutch position
   shift actuator operation start
   gear position monitoring
   half-clutch control
   clutch actuator operation start
   time

An embodiment will be hereinafter described in detail with reference to the drawings.

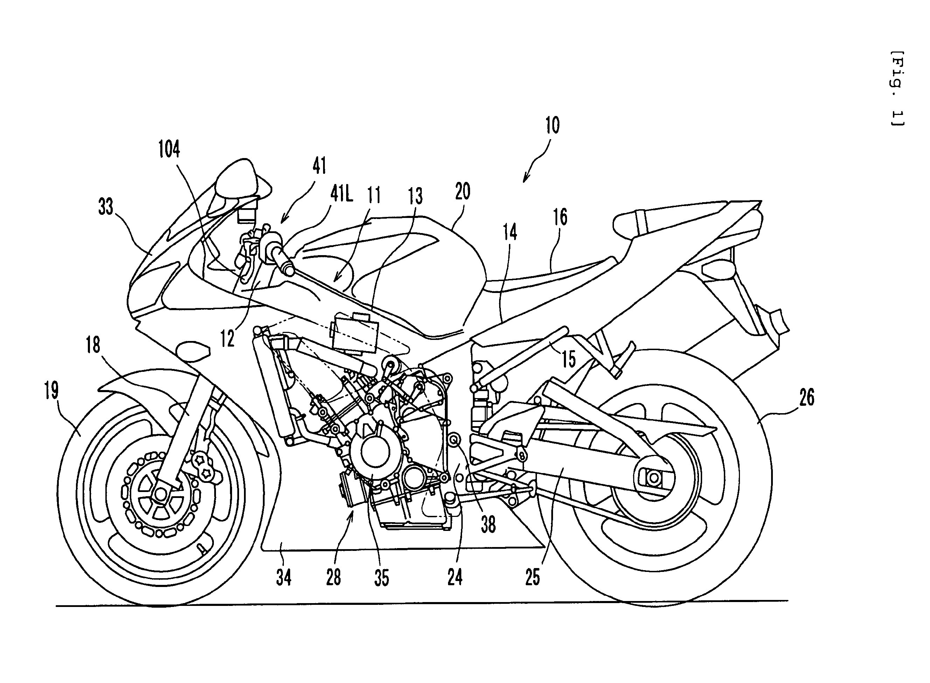

Fig. 1 illustrates a motorcycle 10 in this embodiment. The motorcycle 10 includes a vehicle body frame 11 constituting the framework, and a seat 16 on which a rider sits. The rider sitting on the seat 16 rides astride the vehicle body frame 11. According to the present teaching, the shape of the vehicle is not limited to that shown in Fig. 1, nor are the maximum speed, displacement volume, size, and other conditions of the vehicle limited thereto. Additionally, the vehicle according to the present teaching is not limited to a so-called motorcycle-type two-wheel vehicle which includes a fuel tank before the seat, but is applicable to other types of two-wheel vehicle. Moreover, the present teaching is not limited to a two-wheel vehicle, but may be other types of saddle-type vehicle. Furthermore, the present teaching is not limited to a saddle-type vehicle, but may be other types of vehicle such as four-wheel buggy for two riders.

In the following description, the front-and-rear direction and the left-and-right direction are defined as viewed by the rider sitting on the seat 16. The vehicle body frame 11 has a steering head pipe 12, a main frame 13 extending diagonally downward to the rear from the steering head pipe 12, left and right seat rails 14 extending diagonally upward to the rear from the intermediate position of the main frame 13, and left and right seat pillar tubes 15 connected with the rear end of the main frame 13 and the intermediate positions of the seat rails 14.

A front wheel 19 is supported by the steering head pipe 12 via a front fork 18. A fuel tank 20 and the seat 16 are supported on the seat rails 14. The seat 16 extends from above the fuel tank 20 toward the rear ends of the seat rails 14. The fuel tank 20 is disposed above the front half parts of the seat rails 14.

A pair of left and right rear arm brackets 24 are provided at the rear end of the main frame 13. In this embodiment, the rear arm brackets 24 and other components provided on the main frame 13 constitute a part of the vehicle body frame 11.

The rear arm brackets 24 project downward from the rear end of the main frame 13. Pivot shafts 38 are equipped on the rear arm brackets 24, and the front ends of rear arms 25 are supported by the pivot shafts 38 such that the rear arms 25 can freely swing. A rear wheel 26 is supported by the rear ends of the rear arms 25.

An engine unit 28 for driving the rear wheel 26 is supported by the vehicle body frame 11. A crank case 35 is supported by the main frame 13 in such a manner as to be suspended therefrom. In this embodiment, a gasoline engine (not shown) is provided in the engine unit 28. However, the engine included in the engine unit 28 is not limited to an internal combustion engine such as a gasoline engine, but may be a motor engine or the like. Alternatively, the engine may be a combination of a gasoline engine and a motor engine.

The motorcycle 10 includes a front cowl 33 and left and right leg shields 34. The leg shields 34 are cover components covering the front parts of the rider's legs.

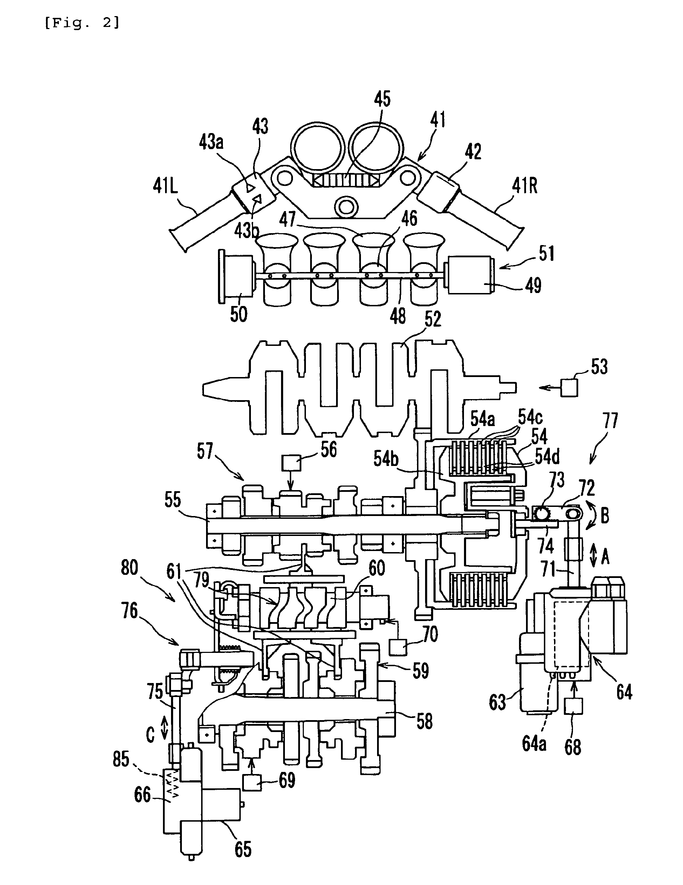

Though not shown in Fig. 1, a brake pedal is equipped in the lower right area of the motorcycle 10. The brake pedal is a component for braking the rear wheel 26. The front wheel 19 is braked by operating a brake lever (not shown) provided in the vicinity of a right grip 41 R (see Fig. 2) of a handlebar 41. A clutch lever 104 is disposed in the vicinity of a left grip 41 L of the handlebar 41. In this embodiment, engagement and disengagement of the clutch can be effected also by operating the clutch lever 104.

Fig. 2 illustrates a structure of a driving system of the motorcycle shown in Fig. 1. The right grip 41 R of the handlebar 41 (see also Fig. 1) constitutes an acceleration grip, and a throttle input sensor 42 is attached to the acceleration grip. The throttle input sensor 42 detects acceleration input (throttle opening input) given by the rider. A shift switch 43 is equipped on the left grip 41 L of the handlebar 41. The shift switch 43 is constituted by a shift-up switch 43a and a shift-down switch 43b, and increases and decreases the shift position in the range between the neutral position and the maximum gear position (6 gear positions in this embodiment) by manual operation. An indicator 45 for showing the current shift position or the like is provided at the center of the handlebar 41.

Throttle valves 46 are attached to throttles 47 constituting an air intake passage. A throttle drive actuator 49 is attached to the right end of a valve stem 48 of the throttle valves 46, while a throttle opening sensor 50 is attached to the left end thereof. The throttle drive actuator 49 and the throttle opening sensor 50 attached to the valve stem 48 constitute a DBW (drive by-wire) 51. The DBW 51 opens and closes the throttles 47 through the throttle drive actuator 49 based on the detection results from the throttle opening sensor 50.

An engine revolution sensor 53 is equipped on the right side of a crank shaft 52 of the not-shown engine. The crank shaft 52 is connected to a main shaft 55 via a wet multi-disc-type clutch 54. The clutch 54 has a clutch housing 54a and a clutch boss 54b. A plurality of friction plates 54c are attached to the clutch housing 54a, and a plurality of clutch plates 54d are attached to the clutch boss 54b. Each of the clutch plates 54d are interposed between the adjoining friction plates 54c, 54c. According to the invention, the friction clutch is not limited to the wet multi-disc-type clutch, but may be a dry clutch or a single-plate-type clutch, for example. The main shaft 55 has multiple-position (six positions in Fig. 2) transmission gears 57 and a main shaft revolution sensor 56. Each of the transmission gears 57 attached to the main shaft 55 engages with corresponding one of transmission gears 59 attached onto a drive shaft 58 disposed parallel with the main shaft 55. In Fig. 2, the transmission gears 57 and the transmission gears 59 are separated so as to simplify the explanation.

The transmission gears 57 and the transmission gears 59 are attached such that either or both of the gears 57 and 59 other than the selected gears are attached to the main shaft 55 or drive shaft 58 in idling condition. Thus, driving force is transmitted from the main shaft 55 to the drive shaft 58 only through selected one pair of the transmission gears. The condition in which the pair of the transmission gears 57 and 59 engage with each other and transmit driving force from the main shaft 55 to the drive shaft 58 is referred to as gear-in condition.

The operation for selecting the transmission gears 57 and transmission gears 59 and changing gears is conducted by means of a shift cam 79. The shift cam 79 has a plurality of cam grooves 60 (three grooves in Fig. 2), and shift forks 61 are attached to the respective cam grooves 60. The respective shift forks 61 engage with the predetermined transmission gears 57 and 59 of the main shaft 55 and drive shaft 58. When the shift cam 79 rotates, the shift forks 61 move along the cam grooves 60 in the axial direction and accordingly the predetermined transmission gears 57 and 59 engaging with the splines of the main shaft 55 and drive shaft 58 move in the axial direction. Then, the transmission gears 57 and 59 having moved in the axial direction engage with another pair of the transmission gears 57 and 59 attached to the main shaft 55 and drive shaft 58 in idling condition to complete the gear change process. The transmission gears 57 and 59 and the shift cam 79 constitute a transmission 80.

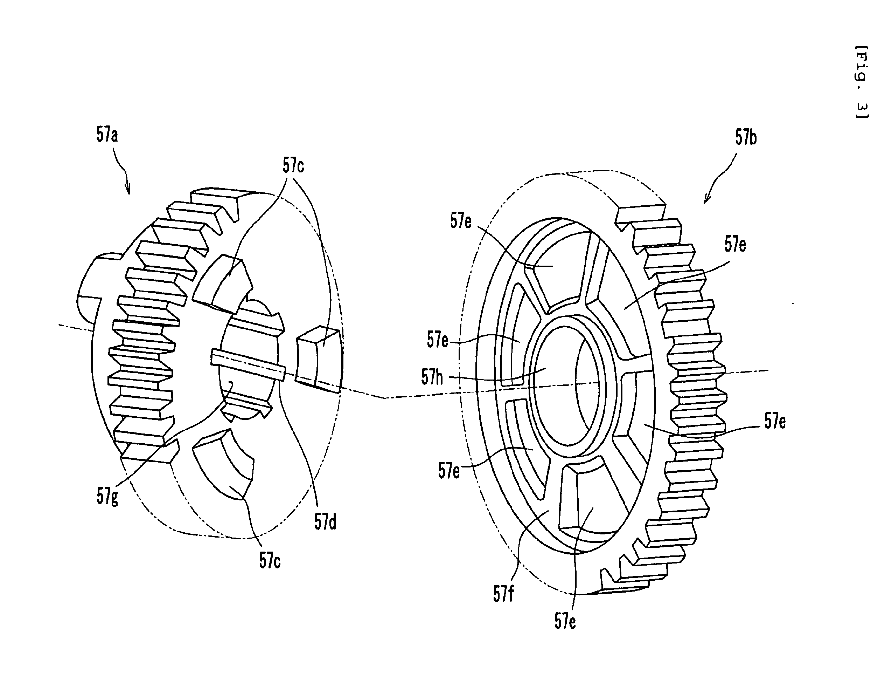

The transmission 80 is a dog-clutch-type transmission. As illustrated in Fig. 3, each of the transmission gears 57 of the transmission 80 has a first gear 57a having engaging projections 57c on its axial end surface, and a second gear 57b having engaging concaves 57e on its axial end surface opposed to the engaging projections 57c. The transmission 80 contains the plural first gears 57a and second gears 57b. Also, the transmission 80 has a plurality of first gears having engaging projections and a plurality of second gears having engaging concaves as the transmission gears 59. Since these structures of the transmission gears 59 are similar to those of the first gears 57a and second gears 57b shown in Fig. 3, explanation of the transmission gears 59 is not repeated herein. Each of the first gear 57a has the three engaging projections 57c disposed at equal intervals on the outer edge of its axial end surface in the circumferential direction. Each of the second gears 57b has the six engaging concaves 57e also disposed at equal intervals in the circumferential direction.

An insertion hole 57g through which the main shaft 55 and the drive shaft 58 are inserted is formed at the axial center of the first gear 57a. A plurality of grooves 57d are provided along the circumference of the insertion hole 57g. The first gear 57a engages with the splines of the main shaft 55 and the drive shaft 58. The second gear 57b has an insertion hole 57h through which the main shaft 55 and the drive shaft 58 are inserted, but the insertion hole 57h does not have grooves around the hole. Thus, the second gear 57b is attached to the main shaft 55 and the drive shaft 58 in idling condition.

When the shift cam 79 (see Fig. 2) rotates, the shift forks 61 move along the cam grooves 60 and accordingly the first gear 57a moves along the splines of the main shaft 55 and the drive shaft 58 in the axial direction. Then, the engaging projections 57c of the first gear 57a come to engagement with the engaging concaves 57e of the second gear 57b, thereby changing the combination of the transmission gears 57 and 59 for transmitting the driving force from the main shaft 55 to the drive shaft 58 and completing the gear change process.

When the shift cam 79 (see Fig. 2) rotates, the first gear 57a moves in the axial direction. At this step, the engaging projections 57c of the first gear 57a do not engage with the engaging concaves 57e of the second gear 57b but contact an axial end face 57f of the second gear 57b in dog-contact condition in some cases. Under the dog-contact condition, the first gear 57a and second gear 57b do not engage but contact with each other, failing to securely attain gear change.

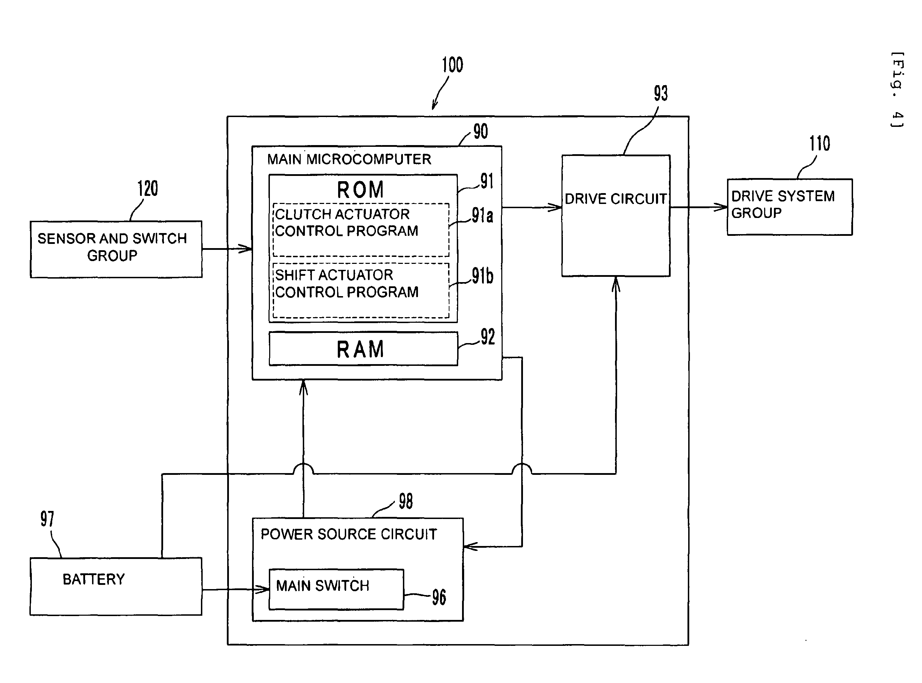

As illustrated in Fig. 2, the clutch 54 and the transmission 80 are operated by a clutch actuator 63 and a shift actuator 65, respectively. The clutch actuator 63 is connected with the clutch 54 via a hydraulic transmission mechanism 64, a rod 71, a lever 72, a pinion 73, and a rack 74. The hydraulic transmission mechanism 64 has a hydraulic cylinder 64a, an oil tank (not shown), a piston (not shown) and other components, and generates hydraulic pressure by the operation of the clutch actuator 63 and transmits the hydraulic pressure to the rod 71. The rod 71 reciprocates in the direction indicated by an arrow A by the operation of the clutch actuator 63, and the lever 72 rotates in the direction indicated by an arrow B. As a result, the clutch 54 is connected or disconnected in accordance with the movement direction of the rack 74. While an electric motor is used as the clutch actuator 63 in this embodiment, other devices such as a solenoid and an electromagnetic valve may be used according to the present teaching. An automated transmission controller according to the embodiment is constituted by the transmission 80, the shift actuator 65, a deceleration mechanism 66, a rod 75, a link mechanism 76, an ECU 100 (see Fig. 4) for controlling the operations of the clutch actuator 63 and shift actuator 65, and an automated clutch device 77 having the clutch 54, the clutch actuator 63, the hydraulic transmission mechanism 64, the rod 71, the lever 72, the pinion 73, and the rack 74.

The shift actuator 65 is connected with the shift cam 79 via the deceleration mechanism 66, a spring 85, the rod 75, and the link mechanism 76. The deceleration mechanism 66 has a plurality of reduction gears (not shown). The spring 85 urges the rod 75 in accordance with the operation of the shift actuator 65. The spring 85 corresponds to an elastic member according to the present teaching. The spring 85 is not required to urge the rod 75 as in this embodiment as long as the spring 85 urges at least a part of the power transmission mechanism (deceleration mechanism 66, the rod 75 and the link mechanism 76) provided between the shift actuator 65 and the transmission 80. For example, the spring 85 may urge the deceleration mechanism 66 or the link mechanism 76. The elastic member according to the present teaching is not limited to a spring, but may be other types of elastic member such as elastic resin.

At the time of gear change, the rod 75 reciprocates in the direction indicated by an arrow C by the operation of the shift actuator 65, and the shift cam 79 rotates through a predetermined angle via the link mechanism 76. Then, the shift forks 61 move along the cam grooves 60 by a predetermined amount in the axial direction. As a result, a pair of the transmission gears 57 and 59 are fixed to the main shaft 55 and the drive shaft 58, respectively, and thus driving force is transmitted from the main shaft 55 to the drive shaft 58. While an electric motor is used as the shift actuator 65 in this embodiment, other devices such as a solenoid and an electromagnetic valve may be used according to the present teaching.

The hydraulic transmission mechanism 64 connected with the clutch actuator 63 has a clutch position sensor 68 for detecting the clutch position (distance between the friction plates 54c and the clutch plates 54d) based on the detection of the stroke position of the piston. While the clutch position is detected by the clutch position sensor 68 which detects the stroke position of the piston in this embodiment, the clutch position may be detected based on the detection of the position of the transmission mechanism provided between the clutch actuator 63 and the clutch 54. For example, the clutch position may be detected based on the detection of the position of the rod 71 or the rack 74. The detection of the clutch position is not limited to indirect detection based on the detected stroke position of the piston as in this embodiment, but may be through direct measurement of the distance between the friction plates 54c and the clutch plates 54d using a sensor. The drive shaft 58 has a vehicle speed sensor 69. The shift cam 79 has a gear position sensor 70 for detecting the gear position (revolution amount of the shift cam).

The ECU 100 (engine control unit) which will be described later controls the operations of the clutch actuator 63 and the shift actuator 65 in accordance with the operation of the shift-up switch 43a or the shift-down switch 43b to execute shift change. More specifically, the sequential processes involving: starting gear change of the transmission gears 57 and 59 by the shift actuator 65; disconnecting the clutch 54 by the clutch actuator 63 after elapse of a predetermined time from the start of gear change; and connecting the clutch 54 by the clutch actuator 63 are performed in this order under a predetermined program or a map at the time of running of the vehicle.

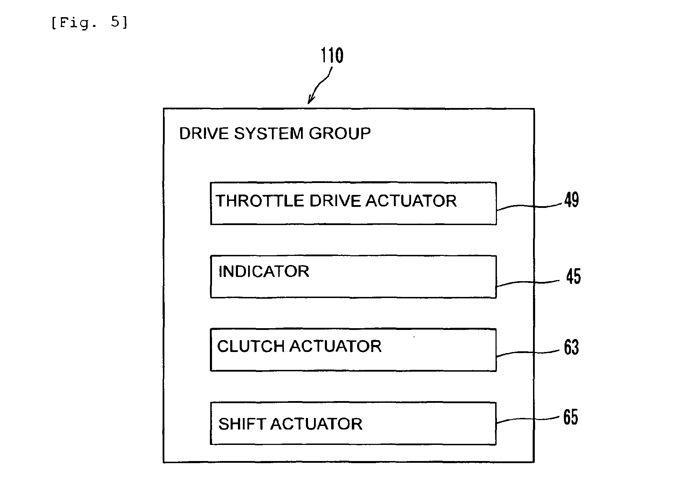

Fig. 4 is a block diagram showing the entire structure of a control system provided on the motorcycle 10. A drive system group 110 is connected with a main microcomputer 90 contained in the ECU 100 via a drive circuit 93. The ECU 100 corresponds to a control unit according to the present teaching. As shown in Fig. 5, the drive system group 110 is constituted by the throttle drive actuator 49, the indicator 45, the clutch actuator 63, and the shift actuator 65 (see also Fig. 2).

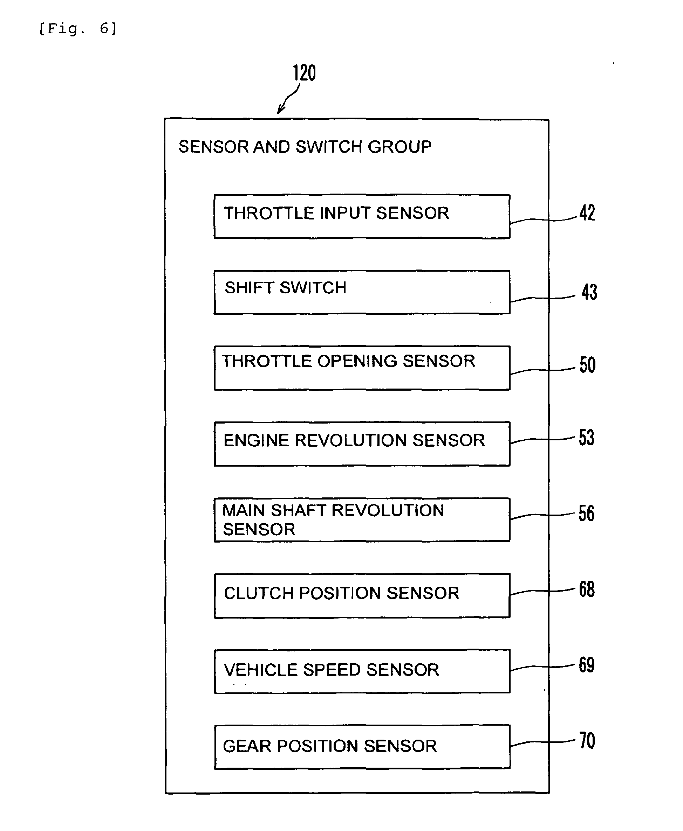

The drive circuit 93 supplies appropriate electric current to the respective devices constituting the drive system group 110 from a battery 97 in response to drive signals sent from the main microcomputer 90. A sensor and switch group 120 is connected with the main microcomputer 90. As shown in Fig. 6, the sensor and switch group is constituted by the throttle input sensor 42, the shift switch 43, the throttle opening sensor 50, the engine revolution sensor 53, the main shaft revolution sensor 56, the clutch position sensor 68, the vehicle speed sensor 69, and the gear position sensor 70 (see also Fig. 2). The detection results from the respective sensors are inputted to the main microcomputer 90, and then the main microcomputer 90 supplies drive signals to the respective devices constituting the drive system group 110 based on the detection results obtained from the respective sensors to control the operations of these devices.

The main microcomputer 90 has a ROM 91 and a RAM 92. The ROM 91 stores a clutch actuator control program 91 a and a shift actuator control program 91 b. The clutch actuator control program 91 a is a program for controlling the operation of the clutch actuator 63. The shift actuator control program 91 b is a program for controlling the operation of the shift actuator 65. It is impossible to delete these programs stored in the ROM 91, nor to write new programs or the like to the ROM 91.

For executing the clutch actuator control program 91 a or the shift actuator control program 91 b, either of these programs is given to the RAM 92 and read by the main microcomputer 90. Then, the main microcomputer 90 controls the operation of the clutch actuator 63 or the shift actuator 65 under the program given to the RAM 92.

A power source circuit 98 connected with the battery 97 has a main switch 96 which is turned on or off in accordance with the operation of a key switch (not shown). When the main switch 96 is turned on, the power source circuit 98 converts voltage of the battery 97 into driving voltage for the main microcomputer 90 and supplies the converted voltage to the main microcomputer 90.

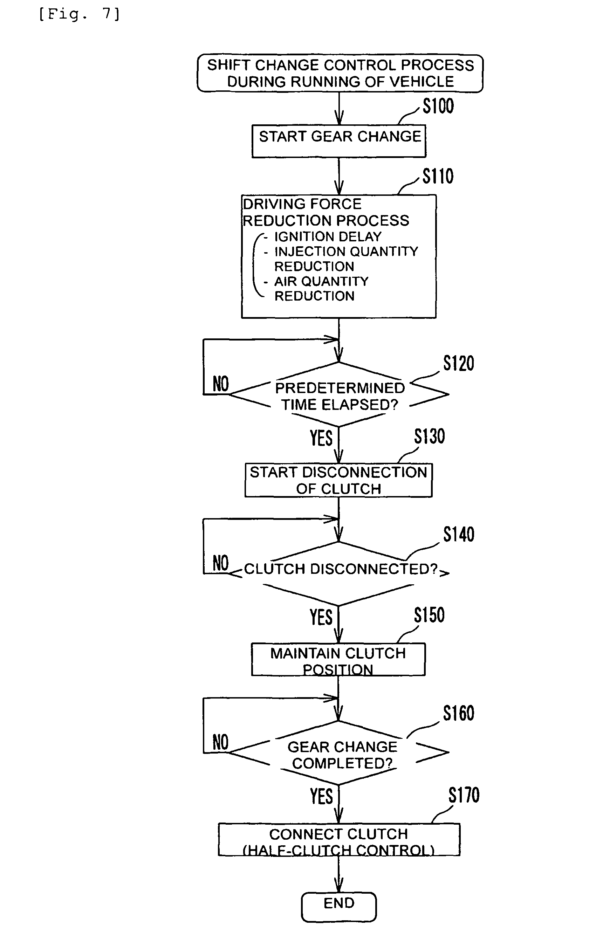

Next, the shift change process during running of the motorcycle 10 (shift-up process or shift-down process) is discussed. Fig. 7 is a flowchart showing the shift change control process during running of the vehicle. When the shift change requiring operation is carried out, i.e., the shift-up switch 43a or the shift-down switch 43b is operated during running of the vehicle, the shift change process during running of the vehicle is obtained from the main routine currently executed and is executed. The procedures shown in Fig. 7 are carried out in shift change to all transmission gear positions. The shift change control process is performed on the occasion when the shift change requiring operation is conducted. However, the shift change control process may be automatically executed under predetermined conditions such as when the revolution of the engine reaches a predetermined value requiring no shift change requiring operation by the rider. Thus, the shift change control process may be automatically performed in response to so-called auto-shift commands.

Initially, the ECU 100 starts gear change in step S100. In this step, the ECU 100 supplies a drive signal to the shift actuator 65 and requires the shift actuator 65 to initiate gear change of the transmission gears 57 and 59. With initiation of this step, the shift cam 79 starts rotating.

After step S100 is completed, a process for reducing engine driving force (driving force reduction process) is carried out in step S110. In this embodiment, at least one of the following three procedures is performed in the driving force reduction process. While the driving force reduction process is conducted simultaneously with the initiation of gear change in step S100 in this embodiment, the driving force reduction process may be performed before starting gear change or after starting gear change according to the present teaching.

One of the procedures in the driving force reduction process is delaying ignition. For delaying ignition, the ECU 100 transmits a control signal to an ignition plug control circuit (not shown) and changes the ignition timing of an ignition plug such that the opening timing of an air intake valve (not shown) can be delayed after the top dead center.

Another procedure in the driving force reduction process is reducing the injection quantity. For reducing the injection quantity, the ECU 100 transmits a control signal to an injection valve control circuit (not shown) to reduce the fuel injection quantity supplied through a fuel injection valve.

Still another procedure in the driving force reduction process is reducing the air quantity. For reducing the air quantity, the ECU 100 transmits a control signal to the electronically controlled throttle valves 46 (see Fig. 2) to control the opening of the throttle valves 46 and reduce the quantity of air passing through the air intake passage.

Procedures for reducing driving force other than the above three procedures may be performed. Only one procedure or a plurality of procedures may be carried out to reduce driving force.

After the process in step S110 is completed, it is determined whether a predetermined time has elapsed in step S120. In this step, ECU 100 judges whether the predetermined time has elapsed after gear change is initiated according to the process in step S100. When it is determined that the predetermined time has not elapsed yet, the flow returns to step S120 and waits until the predetermined time elapses.

When it is determined that the predetermined time has elapsed after the initiation of gear change in step S120, disengagement of the clutch is started in step S130. In this step, the ECU 100 supplies a driving signal to the clutch actuator 63 and requires the clutch actuator 63 to disconnect the clutch 54. When this step is conducted, the clutch 54 is brought into disengagement at a fixed speed until the clutch 54 comes to a predetermined clutch position.

After the process in step S130 is completed, it is determined whether the clutch is in the disengagement condition in step S140. In this step, the ECU 100 judges whether the clutch position of the clutch 54 is at the disengagement position based on the detection result from the clutch position sensor 68 (see Fig. 2). When it is determined that the clutch is not in the disengagement condition, the flow returns to step S140 and waits until the clutch comes to the disengagement condition.

When it is determined that the clutch is in the disengagement condition in step S140, a process for maintaining the clutch position is performed in step S150. In this process, the ECU 100 executes a process for maintaining the clutch position determined as the position of disengagement condition in step S140. By this process, the clutch 54 is maintained under the disengagement condition.

After the process in step S150 is completed, it is determined whether gear change has been completed in step S160. In this step, the ECU 100 judges whether gear change has been finished based on the detection result from the gear position sensor 70. When it is determined that gear change has not been completed, the flow returns to step S160 and waits until gear change is completed.

When it is determined that gear change has been completed in step S160, the clutch is connected in step S170. In this step, the ECU 100 supplies a drive signal to the clutch actuator 63 and requires the clutch actuator 63 to connect the clutch 54. In step S170, half-clutch control under which the clutch 54 is gradually connected is performed from the time when the connection of the clutch 54 is started until the time when the clutch 54 reaches the predetermined clutch position. After execution of the process in step S170, the shift change control process during running of the vehicle is completed.

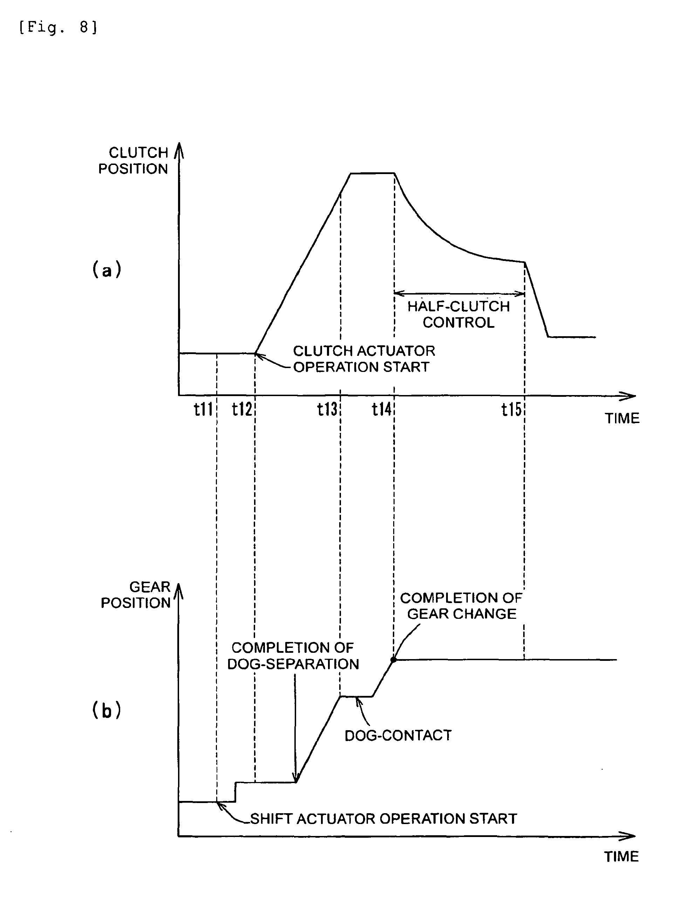

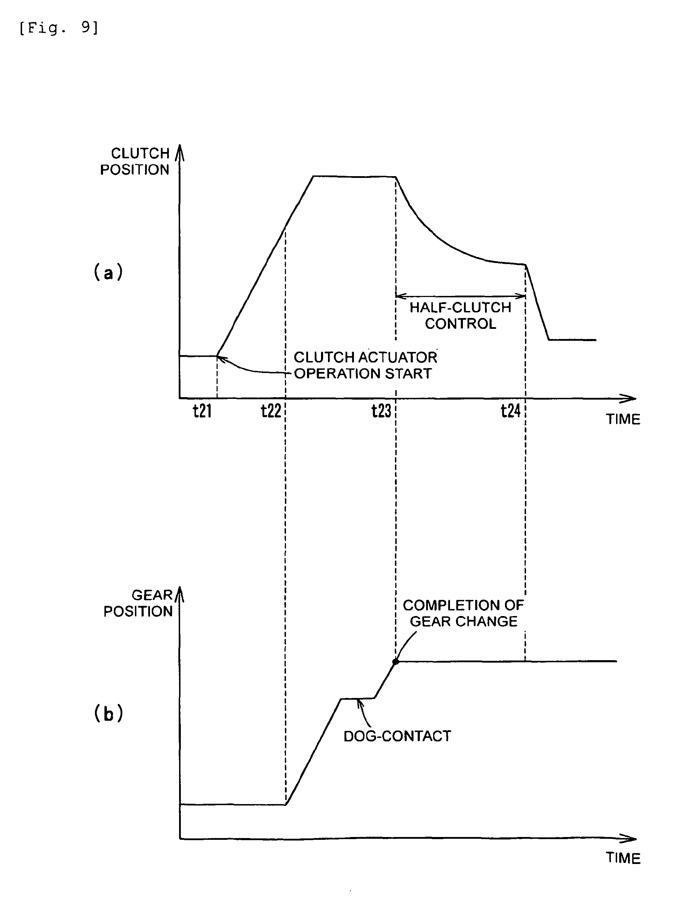

Figs. 8(a) and 8(b) show the clutch position and gear position with elapse of time when the shift change control process during running of the vehicle shown in Fig. 7 is executed. Figs. 9(a) and 9(b) show the clutch position and gear position with elapse of time at the time of shift change during running of a motorcycle according to the related art.

Fig. 9(a) shows the clutch position from the beginning to the end of shift change. Fig. 9(b) shows the gear position with elapse of time from the beginning to the end of shift change. As shown in Fig. 9(a), conventionally, gear change is started (time t22) after elapse of a predetermined time from the initiation of disengagement of the clutch 54 (time t21). After the clutch 54 is brought to the disengagement condition, this condition is maintained at this clutch position and completion of gear change is detected (time t23). Then, after half-clutch control (time t24), the clutch 54 is connected. In the related art, therefore, disengagement of the clutch 54 is initially started after initiation of shift change, and then gear change is started after elapse of the predetermined time from the initiation of disengagement.

On the other hand, according to the motorcycle 10 in this embodiment shown in Figs. 8(a) and 8(b), gear change is initially started after initiation of shift change (time t11). In addition, the driving force reduction process (Fig. 7, step S110) is started simultaneously with the initiation of gear change. The driving force reduction process reduces driving force transmitted to the main shaft 55. Thus, the engaging first gear 57a and second gear 57b can be easily separated (dog-separated) at a predetermined clutch position (half-clutch position) during the disengagement period of the clutch 54 which follows the driving force reduction process. Thus, in the step where the driving force transmitted to the main shaft 55 is gradually reduced by the disengagement of the clutch 54, the driving force reduction process can be a supplemental process for reducing the driving force for the main shaft 55.

After elapse of a predetermined time from the initiation of gear change (time t11), disconnection of the clutch 54 starts (time t12). When the gear position in the dog-separation condition at the lower position comes to a possible dog-contact condition at the higher position after the initiation of disengagement of the clutch 54 (time t13) or slightly after the possible dog-contact condition, the clutch 54 is brought into disengagement condition. Thus, at the time of engagement between the fist gear 57a and second gear 57b, driving force transmitted to the main shaft 55 can be reduced to almost zero. As a result, the gear-in condition can be smoothly achieved. Then, the disengagement condition of the clutch 54 is maintained and completion of gear change is detected similarly to the case of Figs 9(a) and 9(b) (time t14). After half-clutch control, the clutch 54 is connected (time t15).

In this embodiment, as discussed with reference to Figs. 8(a) and 8(b) and Figs. 9(a) and 9(b), the shift actuator 65 is initially operated to start gear change when the shift change requiring operation is conducted during running of the vehicle. After elapse of the predetermined time from the initiation of gear change, the clutch actuator 63 is operated to start disconnection of the clutch 54. Thus, the disengagement period of the clutch 54 (see t12 through t15 in Figs. 8(a) and 8(b)) is shorter than that according to the related art (t21 through t24 in Figs. 9(a) and 9(b)). Since the disengagement period of the clutch 54 is short, the period of non-acceleration even at the time of operation the accelerator and the period of deceleration due to running resistance can be reduced. Accordingly, riding feeling given to the rider can be enhanced.

According to the motorcycle 10 in this embodiment, therefore, gear change is initially started when shift change is required during running of the vehicle, and then disconnection of the clutch 54 is started after elapse of the predetermined time from the initiation of gear change. Thus, the disengagement period of the clutch 54 can be shortened. Accordingly, the period of non-acceleration even at the time of operation of the accelerator and the period of deceleration due to running resistance can be reduced, and thus riding feeling given to the rider can be enhanced.

In this embodiment, completion of gear change of the transmission 80 is detected by the gear position sensor 70 after the start of disconnection of the clutch 54, and half-clutch control over the clutch 54 is started based on this detection. Thus, half-clutch control can be initiated after gear change is securely completed.

In this embodiment, the spring 85 for urging the rod 75 in accordance with the operation of the shift actuator 65 is provided. Thus, when the dog-separation is carried out with the clutch 54 engaging, large reaction force given from the transmission gears 57 and 59 can be eliminated. Additionally, force applied to the rod 75 can be maintained at a constant level.

In this embodiment, the driving force reduction process (at least one of the procedures for delaying ignition, reducing the injection quantity, and reducing the air quantity) is also performed at the time of shift change. Thus, driving force transmitted to the main shaft 55 through the clutch 54 can be reduced. Accordingly, dog-separation can be easily carried out at the half-clutch position during the disengagement period of the clutch 54.

In this embodiment, it is determined whether gear change has been completed after the clutch 54 is brought into disengagement condition. When it is determined that gear change has been completed, the process goes to the clutch connecting step. In this case, the clutch 54 is temporarily in the disengagement condition when gear change is completed at any time during the disengagement period of the clutch 54, and thereafter the clutch is connected. However, the clutch 54 may be promptly connected when gear change is completed by monitoring the gear position simultaneously with the initiation of gear change. This case is now explained.

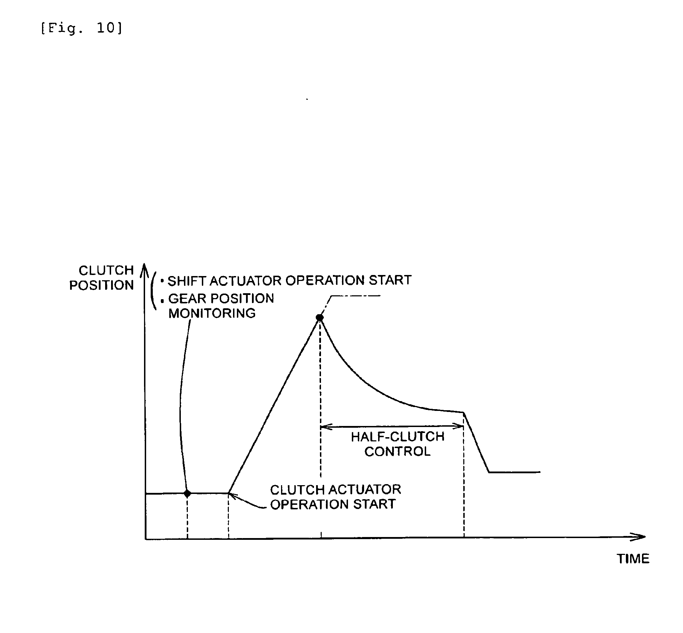

Fig. 10 shows the clutch position with elapse of time during shift change in a motorcycle in a modified example. In the motorcycle shown in Fig. 10 in this modified example, the gear position sensor 70 starts monitoring the gear position simultaneously with the start of operation of the shift actuator 65. When completion of gear change is detected during the disengagement period of the clutch 54, half-clutch control over the clutch 54 is initiated.

In the modified example shown in Fig. 10, therefore, the gear position is monitored from the initiation of gear change, and half-clutch control is promptly started when completion of gear change is detected. As a result, time required for disengagement of the clutch 54 can be reduced to the minimum in accordance with the respective running conditions such as accelerating and climbing a slope. Accordingly, time required for shift change can be shortened.

As obvious from above description, the present teaching is applicable to an automated transmission controller and a vehicle including the automated transmission controller.

An automated transmission controller according to a preferred embodiment includes: a friction clutch; a transmission having a plurality of first gears on which engaging projections are formed and a plurality of second gears on which engaging concaves to be engaged with the engaging projections are formed, the engaging projections of the first gears and the predetermined engaging concaves of the second gears engaging with each other to effect gear change; a clutch actuator for connecting and disconnecting the friction clutch; a shift actuator for executing gear change of the transmission; and a control unit for controlling the operations of the clutch actuator and the shift actuator. The control unit initially operates the shift actuator to start gear change of the transmission and then operates the clutch actuator to start disconnection of the friction clutch at the time of shift change during running.

According to the above embodiment of an automated transmission controller, disconnection of the friction clutch is started after initiation of gear change. Thus, the disengagement period of the friction clutch is shorter than that of the shift change operation in the related arts according to the above patent references. As a result, the period of non-acceleration even at the time of operation of the accelerator and the period of considerable deceleration due to running resistance can be reduced, and thus riding feeling given to the rider can be enhanced.

The vehicle having the automated transmission controller which automatically executes shift change provided according to the present teaching can enhance riding feeling given to a rider.

## Claims

1. Automated transmission controller, comprising:
a friction clutch (54);
a transmission (80) having a plurality of first gears (57a) on which engaging projections (57c) are formed and a plurality of second gears (57b) on which engaging concaves (57e) to be engaged with the engaging projections (57c) are formed, the engaging projections (57c) of the first gears (57a) and the predetermined engaging concaves (57e) of the second gears (57b) engaging with each other to effect gear change;
a clutch actuator (63) for connecting and disconnecting the friction clutch (54);
a shift actuator (65) for executing gear change of the transmission (80); and
a control unit (100) for controlling the operations of the clutch actuator (63) and the shift actuator (65), **characterized in that** the control unit (100) is configured to initially operate the shift actuator (63) to start gear change of the transmission (80),
and then to operate the clutch actuator (65) to start disconnection of the friction clutch (54) at the time of shift change during running, and is configured to connect the friction clutch (54) after detection of gear change completion of the transmission given by a gear position sensor (70) for detecting the gear position of the transmission (80).

2. Automated transmission controller according to claim 1, **characterized in that** the control unit (100) is configured to operate the clutch actuator (63) to start disconnection of the friction clutch (54) after elapse of a predetermined time from initiation of gear change of the transmission (80) by operating the shift actuator (65) at the time of shift change during running.

3. Automated transmission controller according to claim 1 or 2, **characterized by** a gear position sensor (70) for detecting the gear position of the transmission (80), wherein, when completion of gear change is detected by the gear position sensor (70) during the period from the initiation of gear change to completion of the gear change, the control unit (100) is configured to operate the clutch actuator (63) to connect the friction clutch (54) before completion of disconnection of the friction clutch (54).

4. Automated transmission controller according to one of the claims 1 to 3, **characterized by** an elastic member (85) for urging a power transmission mechanism disposed between the shift actuator (65) and the transmission (80) in accordance with the operation of the shift actuator (65).

5. Automated transmission controller according to one of the claims 1 to 4, **characterized in that** the automated transmission controller is mounted on a vehicle (10) having an engine, and the control unit (100) additionally is configured to execute a driving force reduction process for reducing engine driving force at the time of shift change.

6. Automated transmission controller according to claim 5, **characterized in that** the control unit (100) is configured to execute the driving force reduction process simultaneously with the initiation of gear change of the transmission (80) by the shift actuator (65), or the control unit (100) is configured to execute the driving force reduction process after elapse of a predetermined time from the initiation of gear change of the transmission (80) by the shift actuator (65), or the control unit (100) is configured to execute the driving force reduction process a predetermined time before the initiation of gear change of the transmission (80) by the shift actuator (65).

7. Automated transmission controller according to claim 5 or 6, **characterized in that** the driving force reduction process is a process for delaying ignition, and/or the driving force reduction process is a process for reducing the fuel injection quantity, and/or the vehicle (10) has an electronically controlled throttle valve (46) provided within an air passage of the engine, and the driving force reduction process is a process for reducing the air quantity by controlling the opening of the electronically controlled throttle valve (46).

8. Vehicle comprising the automated transmission controller according to one of the claims 1 to 7.

9. Vehicle according to claim 8 being a saddle-type vehicle.

10. Shift change process of an automated manual transmission of a vehicle (10), wherein when shift change is required during running of the vehicle, the following steps are executed:
starting gear change of transmission gears (57a, 57b) of the transmission (80) by a shift actuator (65);
starting disconnection of a clutch (54) by a clutch actuator (63) after the start of gear change; and
connecting the clutch (54) after detection of gear change completion of the transmission .

11. Shift change process according to claim 10, **characterized in that** disconnection of the clutch (54) by the clutch actuator (63) is started after elapse of a predetermined time from the start of gear change.

12. Shift change process according to claim 10 or 11, **characterized in that** simultaneously with the start of gear change a driving force reduction process is started to reduce a driving force transmitted to a main shaft (55) of the transmission (80).

## Patentansprüche

1. Steuervorrichtung für ein automatisches Getriebe, die umfasst:
eine Reibkupplung (54);
ein Getriebe (80), das eine Vielzahl erster Zahnräder (57a), an denen Eingriffsvorsprünge (57c) ausgebildet sind, und eine Vielzahl zweiter Zahnräder (57b) aufweist, an denen Eingriffs-Hohlrundungen (57e) ausgebildet sind, die mit den Eingriffsvorsprüngen (57c) in Eingriff gebracht werden, wobei die Eingriffsvorsprünge (57c) der ersten Zahnräder (57a) und die vorgegebenen Eingriffs-Hohlrundungen (57e) der zweiten Zahnräder (57b) miteinander in Eingriff kommen, um Gangwechsel zu bewirken;
eine Kupplungs-Betätigungseinrichtung (63) zum Einrücken und Ausrücken der Reibkupplung (54);
eine Schalt-Betätigungseinrichtung (56) zum Ausführen von Gangwechsel des Getriebes (80); und
eine Steuereinheit (100) zum Steuern der Funktionen der Kupplungs-Betätigungseinrichtung (63) und der Schalt-Betätigungseinrichtung (65), **dadurch gekennzeichnet,**
**dass** die Steuereinheit (100) so eingerichtet ist, dass sie zunächst die Schalt-Betätigungseinrichtung (63) betätigt, um Gangwechsel des Getriebes (80) in Gang zu setzen, und dann die Kupplungs-Betätigungseinrichtung (65) betätigt, um Ausrücken der Reibkupplung (54) beim Schalten während der Fahrt in Gang zu setzen, und so eingerichtet ist, dass sie die Reibkupplung (54) nach Erfassung von Abschluss des Gangwechsels des Getriebes durch einen Gangpositionssensor (70) zum Erfassen der Gangposition des Getriebes (80) einrückt.

2. Steuervorrichtung für ein automatisches Getriebe nach Anspruch 1, **dadurch gekennzeichnet, dass** die Steuereinheit (100) so eingerichtet ist, dass sie die Kupplungs-Betätigungseinrichtung (63) betätigt, um Ausrücken der Reibkupplung (54) nach Ablauf einer vorgegebenen Zeit von Auslösung von Gangwechsel des Getriebes (80) an in Gang zu setzen, indem sie die Schalt-Betätigungseinrichtung (65) beim Schalten während der Fahrt betätigt.

3. Steuervorrichtung für ein automatisches Getriebe nach Anspruch 1 oder 2, **gekennzeichnet durch** einen Gangpositions-Sensor (70) zum Erfassen der Gangposition des Getriebes (80), wobei die Steuereinheit (100) so eingerichtet ist, dass sie, wenn Abschluss von Gangwechsel **durch** den Gangpositions-Sensor (70) während der Periode von der Auslösung des Gangwechsels bis zum Abschluss des Gangwechsels erfasst wird, die Kupplungs-Betätigungseinrichtung (63) betätigt, um die Reibkupplung (54) vor Abschluss des Ausrückens der Reibkupplung (54) einzurücken.

4. Steuervorrichtung für ein automatisches Getriebe nach einem der Ansprüche 1 bis 3, **gekennzeichnet durch** ein elastisches Element (85), das entsprechend der Betätigung der Gang-Betätigungseinrichtung (65) auf einen Kraftübertragungsmechanismus drückt, der zwischen der Schalt-Betätigungseinrichtung (65) und dem Getriebe (80) angeordnet ist.

5. Steuervorrichtung für ein automatisches Getriebe nach einem der Ansprüche 1 bis 4, **dadurch gekennzeichnet, dass** die Steuervorrichtung für ein automatisches Getriebe an einem Fahrzeug (10) mit einem Motor angebracht ist, und die Steuereinheit (100) des Weiteren so eingerichtet ist, dass sie einen Antriebskraft-Verringerungsprozess ausführt, um die Motor-Antriebskraft beim Schalten zu verringern.

6. Steuervorrichtung für ein automatisches Getriebe nach Anspruch 5, **dadurch gekennzeichnet, dass** die Steuereinheit (100) so eingerichtet ist, dass sie den Antriebskraft-Verringerungsprozess simultan zu der Auslösung von Gangwechsel des Getriebes (80) durch die Schalt-Betätigungseinrichtung (65) ausführt, oder die Steuereinheit (100) so eingerichtet ist, dass sie den Antriebskraft-Verringerungsprozess nach dem Verstreichen einer vorgegebenen Zeit von der Auslösung von Gangwechsel des Getriebes (80) an durch die Schalt-Betätigungseinrichtung (65) ausführt, oder die Steuereinheit (100) so eingerichtet ist, dass sie den Antriebskraft-Verringerungsprozess zu einer vorgegebenen Zeit vor der Auslösung von Gangwechsel des Getriebes (80) durch die Schalt-Betätigungseinrichtung (65) ausführt.

7. Steuervorrichtung für ein automatisches Getriebe nach Anspruch 5 oder 6, **dadurch gekennzeichnet, dass** der Antriebskraft-Verringerungsprozess ein Prozess zum Verzögern von Zündung ist und/oder der Antriebskraft-Verringerungsprozess ein Prozess zum Verringern der Kraftstoffeinspritzmenge ist und/oder das Fahrzeug (10) ein elektronisch gesteuertes Drosselventil (46) aufweist, das in einem Luftkanal des Motors vorhanden ist, und der Antriebskraft-Verringerungsprozess ein Prozess ist, mit dem die Luftmenge verringert wird, indem die Öffnung des elektronisch gesteuerten Drosselventils (46) gesteuert wird.

8. Fahrzeug, das die Steuervorrichtung für ein automatisches Getriebe nach einem der Ansprüche 1 bis 7 umfasst.

9. Fahrzeug nach Anspruch 8, das ein Sattel-Fahrzeug ist.

10. Schaltprozess eines automatischen Schaltgetriebes eines Fahrzeugs (10), wobei, wenn Schalten während der Fahrt des Fahrzeugs erforderlich ist, die folgenden Schritte ausgeführt werden:
Ingangsetzen von Gangwechsel von Getriebezahnrädern (57a, 57b) des Getriebes (80) mit einem Schalt-Betätigungselement (65);
Ingangsetzen von Ausrücken einer Kupplung (54) mit einem Kupplungs-Betätigungselement (63) nach dem Ingangsetzen des Gangwechsels; und
Einrücken der Kupplung (54) nach Erfassung von Abschluss des Gangwechsels des Getriebes.

11. Schaltprozess nach Anspruch 10, **dadurch gekennzeichnet, dass** Ausrücken der Kupplung (54) mit dem Kupplungs-Betätigungselement (63) nach Verstreichen einer vorgegebenen Zeit vom Ingangsetzen von Gangwechsel an in Gang gesetzt wird.

12. Schaltprozess nach Anspruch 10 oder 11, **dadurch gekennzeichnet, dass** simultan zu dem Ingangsetzen von Gangwechsel ein Antriebskraft-Verringerungsprozess in Gang gesetzt wird, um eine auf eine Hauptwelle (55) des Getriebes (80) übertragene Antriebskraft zu reduzieren.

## Revendications

1. Contrôleur de transmission automatisée comportant :
un embrayage à friction (54) ;
une transmission (80) possédant plusieurs premiers engrenages (57a) sur lesquels sont réalisées des protubérances d'enclenchement (57c) et plusieurs seconds engrenages (57b) sur lesquels sont réalisées des cavités d'enclenchement (57e) destinées à s'enclencher avec des protubérances d'enclenchement (57c) des premiers engrenages (57a) et les cavités d'enclenchement prédéterminées (57e) des seconds engrenages (57b) s'enclenchent mutuellement pour effectuer un changement de rapport ;
un actionneur d'embrayage (63) destiné à embrayer et débrayer l'embrayage à friction (54) ;
un actionneur de changement de rapport (65) destiné à exécuter un changement de rapport de la transmission (80) ; et
une unité de commande (100) destinée à commander les opérations de l'actionneur d'embrayage (63) et de l'actionneur de changement de rapport (65), **caractérisé en ce que** l'unité de commande (100) est configurée pour activer initialement l'actionneur de changement de rapport (63) pour déclencher le changement de rapport de la transmission (80), puis activer l'actionneur d'embrayage (65) pour déclencher le débrayage de l'embrayage à friction (54) au moment du changement de rapport, en cours de fonctionnement, et est configurée pour embrayer l'embrayage à friction (54) après détection de l'exécution d'un changement de rapport de la transmission, donnée par un capteur de position de rapport (70) destiné à détecter la position de rapport de la transmission (80).

2. Contrôleur de transmission automatisée selon la revendication 1, **caractérisé en ce que** l'unité de commande (100) est configurée pour activer l'actionneur d'embrayage (63) afin de déclencher le débrayage de l'embrayage à friction (54) après une durée prédéterminée à partir du déclenchement du changement de rapport de la transmission (80) en activant l'actionneur de changement de rapport (65) au moment du changement de rapport, pendant le fonctionnement.

3. Contrôleur de transmission automatisée selon la revendication 1 ou 2, **caractérisé par** un capteur de position de rapport (70), destiné à détecter la position de rapport de la transmission (80), dans lequel, lorsque l'exécution d'un changement de rapport est détectée par le capteur de position de rapport (70) pendant la période comprise entre le déclenchement de changement de rapport et l'exécution de changement de rapport, l'unité de commande (100) est configurée pour activer l'actionneur d'embrayage (63) afin d'embrayer l'embrayage à friction (54) avant l'exécution préalablement au débrayage de l'embrayage à friction (54).

4. Contrôleur de transmission automatisée selon l'une des revendications 1 à 3, **caractérisé par** un organe élastique (85) destiné à solliciter un mécanisme de transmission de puissance, disposé entre l'actionneur de changement de rapport (65) et la transmission (80), selon le fonctionnement de l'actionneur de changement de rapport (65).

5. Contrôleur de transmission automatisée selon l'une des revendications 1 à 4, **caractérisé en ce que** le contrôleur de transmission automatisée est monté sur un véhicule (10) possédant un moteur, et l'unité de commande (100) est en outre configurée pour exécuter un processus de réduction de force motrice destiné à réduire la force motrice du moteur au moment du changement de rapport.

6. Contrôleur de transmission automatisée selon la revendication 5, **caractérisé en ce que** l'unité de commande (100) est configurée pour exécuter le processus de réduction de force motrice simultanément au déclenchement du changement de rapport de la transmission (80) par l'actionneur de changement de rapport (65), ou l'unité de commande (100) est configurée pour exécuter le processus de réduction de force motrice après une durée prédéterminée à partir du déclenchement du changement de rapport de la transmission (80) par l'actionneur de changement de rapport (65), ou l'unité de commande (100) est configurée pour exécuter le processus de réduction de force motrice pendant une durée prédéterminée avant le déclenchement d'un changement de rapport de la transmission (80) par l'actionneur de changement de rapport (65).

7. Contrôleur de transmission automatisée selon la revendication 5 ou 6, **caractérisé en ce que** le processus de réduction de force motrice est un processus destiné à retarder l'allumage, et/ou le processus de réduction de force motrice est un processus permettant de réduire la quantité de carburant injectée, et/ou le véhicule (10) possède un papillon de gaz à commande électronique (46) muni d'une entrée d'air moteur, et le processus de réduction de force motrice est un processus permettant de réduire la quantité d'air en commandant l'ouverture du papillon de gaz à commande électronique (46).

8. Véhicule équipé du contrôleur de transmission automatisée selon l'une des revendications 1 à 7.

9. véhicule selon la revendication 8, et constituant un véhicule à selle.

10. Processus de changement de rapport d'une transmission manuelle automatisée d'un véhicule (10), dans lequel, lorsqu'un changement de rapport est nécessaire pendant le fonctionnement du véhicule, les étapes exécutées consistent à :
déclencher un changement de rapport des engrenages de transmission (57a, 57b) de la transmission (80) au moyen d'un actionneur de changement de rapport (65) ;
déclencher le débrayage d'un embrayage (54) au moyen d_{'}un actionneur d'embrayage (63) après le déclenchement d'un changement de rapport ; et
embrayer l'embrayage (54) après la détection de l'exécution d'un changement de rapport de la transmission.

11. Processus de changement de rapport selon la revendication 10, **caractérisé en ce que** le débrayage de l'embrayage (54) par l'actionneur d'embrayage (63) est déclenché après une période prédéterminée à partir du déclenchement du changement de rapport.

12. Processus de changement de rapport selon la revendication 10 ou 11, **caractérisé en ce que** simultanément au déclenchement d'un changement de rapport, un processus de réduction de force motrice est déclenché pour réduire une force motrice transmise à un arbre principal (55) de la transmission (80).
